# EUROPEAN PATENT APPLICATION

(11) **EP 3 147 864 A2**
(43) Date of publication of application: **29.03.2017**
(21) Application number: 16182161.6
(22) Date of filing: 01.08.2016
(51) Int. Cl.: G06T 7/254, G06T 7/73, G06T 7/593

(54) **POSITION ESTIMATING DEVICE AND POSITION ESTIMATING METHOD**

(30) Priority: 28.09.2015 JP 2015190353
(71) Applicant: FUJITSU LIMITED, 211-8588 Kanagawa (JP)
(72) Inventor: Taguchi, Akinori, Kanagawa, 211-8588 (JP); Nakashima, Satoshi, Kanagawa, 211-8588 (JP)
(74) Representative: Hoffmann Eitle

(57) **Abstract**

A storage (321) stores a first image of an object (122) in an image-capturing target region (121) and a second image, the first image being captured by a first imaging device (111, 311), and the second image being captured by a second imaging device (112, 312) by use of a reflected electromagnetic wave from the image-capturing target region, using an electromagnetic source (113, 313) that radiates an electromagnetic wave onto the image-capturing target region. When a position of a strongly reflective region in the second image corresponds to a prescribed position in the second image, a position estimator (327) estimates a position of the object on the basis of the first image and complementary information that complements an image of the strongly reflective region.

## Description

### FIELD

The embodiments discussed herein are related to a position estimating device and a position estimating method.

### BACKGROUND

A technology is known that detects, on the basis of a video captured by a camera, that a customer picked up a product in a retail store (see, for example, Patent Documents 1 to 3). Information indicating that a customer picked up a product can be used as information indicating purchase behavior of the customer. For example, if a product is identified that a customer picked up once but did not purchase but instead returned to a product shelf where it was before, it is possible to, for example, create more effective advertising so as to increase sales, which promises marketing effects.
Patent Document 1: Japanese Laid-open Patent Publication No. 2009-48430
Patent Document 2: Japanese Laid-open Patent Publication No. 2009-3701
Patent Document 3: Japanese Laid-open Patent Publication No. 2014-26350

### SUMMARY

It is an object in one aspect of the invention to estimate a position of an object on the basis of an image captured by an imaging device and an image captured by an imaging device using an electromagnetic source.

According to an aspect of the embodiments, a position estimating device includes a storage and a position estimator.

The storage stores a first image of an object in an image-capturing target region and a second image, the first image being captured by a first imaging device, and the second image being captured by a second imaging device by use of a reflected electromagnetic wave from the image-capturing target region, using an electromagnetic source that radiates an electromagnetic wave onto the image-capturing target region. When a position of a strongly reflective region in the second image corresponds to a prescribed position in the second image, the position estimator estimates a position of the object on the basis of the first image and complementary information that complements an image of the strongly reflective region.

### BRIEF DESCRIPTION OF DRAWINGS

FIG. 1 illustrates a configuration of a position estimating system.
FIG. 2 is a flowchart of position estimating processing.
FIG. 3 illustrates a specific example of the configuration of the position estimating system.
FIG. 4 illustrates an example of an application of the position estimating system.
FIG. 5 illustrates a prescribed region in an infrared image.
FIG. 6 is a flowchart that illustrates a specific example of position estimating processing.
FIG. 7 illustrates a difference visible image and a difference infrared image.
FIG. 8 illustrates a temporal change in the feature amount in a visible video.
FIG. 9 illustrates a difference region that includes a high brightness region.
FIG. 10 illustrates a temporal change in the feature amount in an infrared video.
FIG. 11 illustrates an estimated difference region.
FIG. 12 is a flowchart of position estimating processing including performing redetermination.
FIG. 13 is a flowchart of redetermination processing.
FIG. 14 illustrates a configuration of an information processing device.

### DESCRIPTION OF EMBODIMENTS

Embodiments will now be described in detail with reference to the drawings.

An image of one camera is two-dimensional information and does not include depth information. Thus, it is difficult to determine a position of an object in three-dimensional space on the basis of an image of one camera. On the other hand, if images of two cameras installed away from each other are used, it is possible to determine a three-dimensional position of an object using the principle of triangulation.

A visible security camera may be installed in a retail store. Further, an infrared camera may also be installed near a product shelf in order to detect, for example, a line of sight to a product from a customer in front of the product shelf. The visible camera captures a visible image on the basis of visible light that is reflected by a subject, and the infrared camera captures an infrared image on the basis of an infrared ray that is radiated from an infrared source and reflected by the subject.

As described above, a visible camera and an infrared camera are installed for different purposes from each other in a retail store. Thus, the inventors have realized that it is possible to utilize a visible image of a visible camera and an infrared image of an infrared camera to estimate a three-dimensional position of an object because the installation positions of the two cameras are known and the two cameras have different optical-axis directions from each other. If the visible image and the infrared image are used in combination, it is possible to detect, for example, a behavior of a customer reaching out for a product.

However, an infrared camera for detecting a line of sight detects an infrared ray that is radiated from an infrared source installed around the infrared camera, and that is reflected by a subject. Thus, when a subject is located at not greater than a prescribed distance from a camera, or when there exists an object made of a material that can easily reflect an infrared ray in the vicinity of the subject, a strongly reflective region in which a brightness value is extremely large may appear in an infrared image because a reflected infrared ray is too strong. In such a strongly reflective region, a phenomenon called whiteout in which an image fades to white and a contour of an object is made unclear occurs.

When a strongly reflective region appears around a subject, it is difficult to determine a three-dimensional position of the subject using triangulation because a correspondence relationship in a position of a subject between a visible image and an infrared image is unclear.

For example, when the hand of a customer exists very close to an infrared source and an infrared ray is reflected by the hand or a sleeve of the customer, that region is a strongly reflective region, so it is difficult to detect a shape of the hand accurately. When such a strong reflection continues to occur for a long time, there is a possibility of determining in error that the customer picked up a product even though he/she did not pick it up, or determining in error that the customer did not pick up a product even though he/she did pick it up.

This problem occurs not only in an infrared image but also in an image that is captured using other electromagnetic sources including a visible light source. Further, the problem occurs not only when an image of the hand of a customer is captured but also when images of other objects in an image-capturing target region are captured.

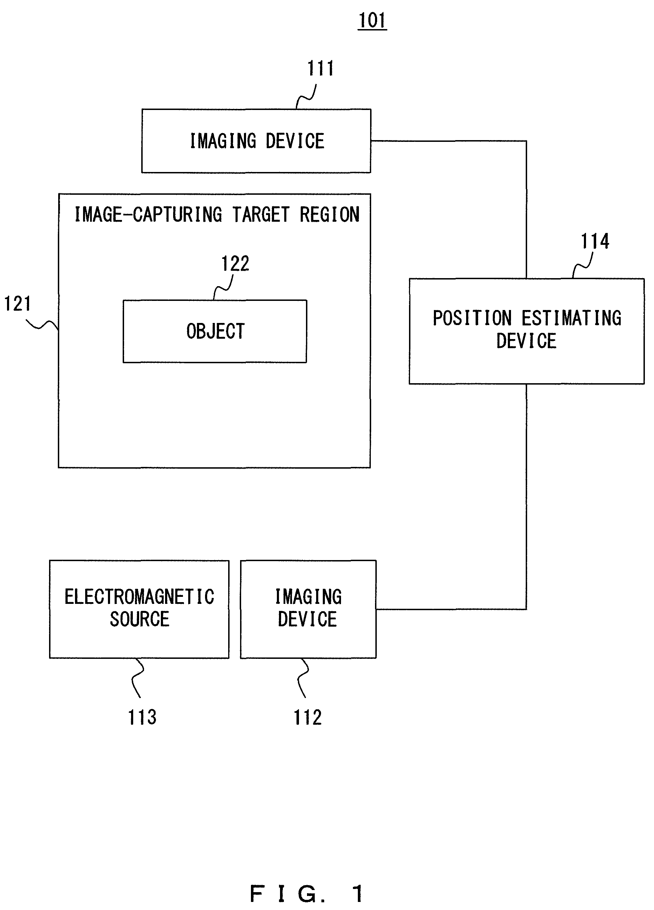

FIG. 1 illustrates an example of a configuration of a position estimating system. A position estimating system 101 of FIG. 1 includes an imaging device 111, an imaging device 112, an electromagnetic source 113, and a position estimating device 114.

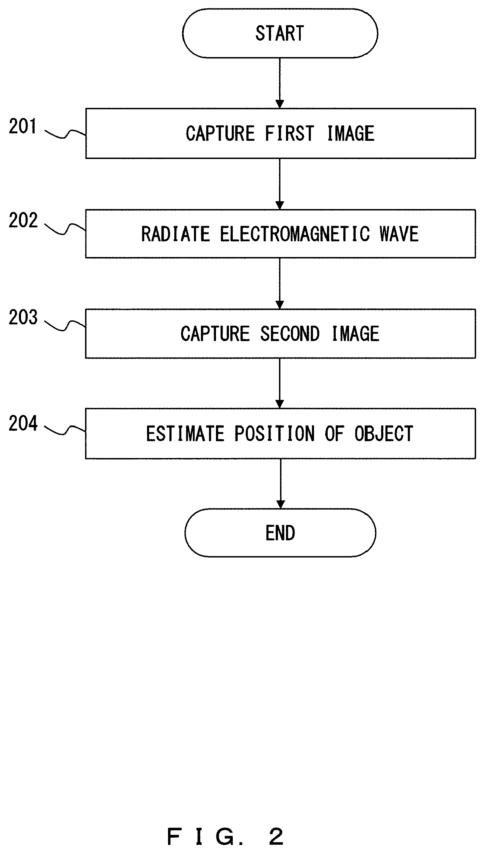

FIG. 2 is a flowchart that illustrates an example of position estimating processing performed by the position estimating system 101 of FIG. 1. The imaging device 111 captures a first image of an object 122 in an image-capturing target region 121 (Step 201) . The electromagnetic source 113 radiates an electromagnetic wave onto the image-capturing target region 121 (Step 202), and the imaging device 112 captures a second image by use of a reflected electromagnetic wave from the image-capturing target region 121 (Step 203). The position estimating system 101 may perform the processes of Step 201 to Step 203 in parallel.

When the position of a strongly reflective region in the second image corresponds to a prescribed position in the second image, the position estimating device 114 estimates a position of the object 122 on the basis of the first image and complementary information that complements an image in the strongly reflective region (Step 204).

According to the position estimating system 101 described above, it is possible to estimate a position of the object 122 on the basis of a first image captured by the imaging device 111 and a second image captured by the imaging device 112 using the electromagnetic source 113.

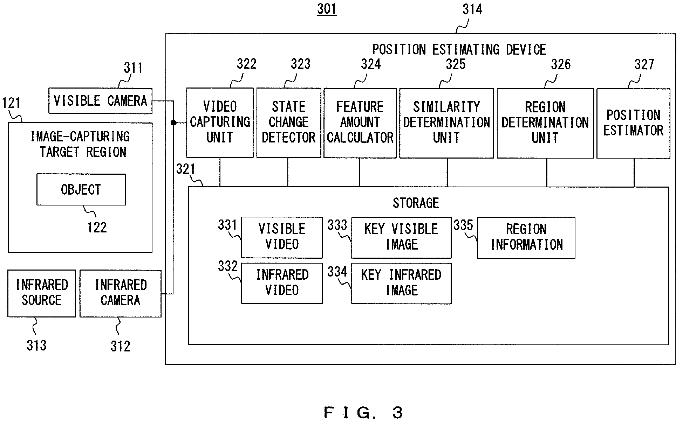

FIG. 3 illustrates a specific example of the position estimating system 101 of FIG. 1. A position estimating system 301 of FIG. 3 includes a visible camera 311, an infrared camera 312, an infrared source 313, and a position estimating device 314. The visible camera 311, the infrared camera 312, the infrared source 313, and the position estimating device 314 correspond to the imaging device 111, the imaging device 112, the electromagnetic source 113, and the position estimating device 114, respectively.

The visible camera 311 captures a visible video 331 of the image-capturing target region 121. The infrared source 313 radiates an infrared ray onto the image-capturing target region 121, and the infrared camera 312 captures an infrared video 332 by use of a reflected infrared ray from the image-capturing target region 121. The radiated infrared ray may be a near-infrared ray. Further, the infrared ray may be radiated indirectly, for example, by reflecting the infrared ray by a mirror. The visible video 331 includes visible images at a plurality of times, and the infrared video 332 includes infrared images at a plurality of times. An image at each time may also be referred to as a frame.

When a whiteout has occurred in a region, in an infrared image, in which it is not surprising if a whiteout occurs, this indicates that there exists the object 122 in the region. A prescribed region in which a whiteout occurs can be predicted from a relationship between an installation position of the infrared camera 312 and an installation position of the infrared source 313, so it is possible to estimate an approximate range in which the object 122 exists when a whiteout occurs in the prescribed region. In this case, the position estimating device 314 can estimate a three-dimensional position of the object 122 on the basis of a position of the object 122 in a visible image and a range in which the object 122 exists in an infrared image.

If a position estimation is performed when a whiteout occurs in a prescribed region, instead of being always not performed when a whiteout occurs in an infrared image, the number of cases in which a position estimation is not performed will be reduced, and the number of cases in which a position estimation is performed will be increased.

The position estimating device 314 includes a storage 321, a video capturing unit 322, a state change detector 323, a feature amount calculator 324, a similarity determination unit 325, a region determination unit 326, and a position estimator 327.

The storage 321 stores therein the visible video 331, the infrared video 332, a key visible image 333, a key infrared image 334, and region information 335. The key visible image 333 is a reference image that is compared with a visible image included in the visible video 331, and the key infrared image 334 is a reference image that is compared with an infrared image included in the infrared video 332. The key visible image 333 and the key infrared image 334 may respectively be, for example, a visible image and an infrared image respectively captured by the visible camera 311 and the infrared camera 312 when there does not exist the object 122 in the image-capturing target region 121.

The region information 335 indicates a position and a shape of a prescribed region in which a whiteout is predicted to occur due to the infrared source 313. The prescribed region is preset in a prescribed position in an infrared image on the basis of a positional relationship between the infrared camera 312 and the infrared source 313.

The video capturing unit 322 stores, in the storage 321, the visible video 331 and the infrared video 332 that are input from the visible camera 311 and the infrared camera 312, respectively.

The state change detector 323 detects a change in the state in the image-capturing target region 121 on the basis of the visible video 331, the infrared video 332, the key visible image 333, and the key infrared image 334. The change in state may be, for example, the occurrence of the object 122 or the movement of the object 122.

The feature amount calculator 324 calculates, in each of a visible image and an infrared image, a feature amount of a region in which a change in state has been detected. For example, in each of the visible image and the infrared image, a coordinate that represents a representative position of a region that corresponds to the object 122 can be used as the feature amount. The representative position of a region may be a point on the periphery of the region, a point situated in the region, or a center of gravity of the region.

The similarity determination unit 325 calculates a similarity between a temporal change in the feature amount in the visible video 331 and a temporal change in the feature amount in the infrared video 332, and compares the calculated similarity with a threshold. Then, when the similarity is greater than the threshold, the similarity determination unit 325 determines that a position estimation based on a visible image and an infrared image is to be performed.

When the similarity is not greater than the threshold, the region determination unit 326 determines whether the region in which a change in state has been detected is a strongly reflective region that corresponds to a prescribed region indicated by the region information 335. Then, when the region in which a change in state has been detected is a strongly reflective region that corresponds to the prescribed region, the region determination unit 326 determines that a position estimation based on a visible image and an infrared image is to be performed. Further, when the region in which a change in state has been detected is not a strongly reflective region that corresponds to the prescribed region, the region determination unit 326 determines that a position estimation based on a visible image and an infrared image is not to be performed.

When the similarity determination unit 325 or the region determination unit 326 determines that a position estimation is to be performed, the position estimator 327 estimates a three-dimensional position of the object 122 on the basis of a visible image and an infrared image when a change in state has been detected.

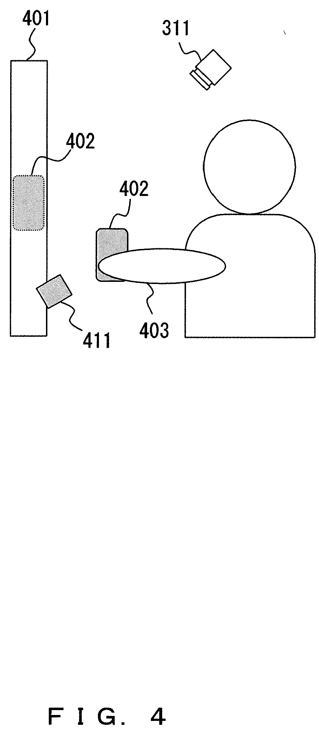

FIG. 4 illustrates an example of an application of the position estimating system 301 of FIG. 3 in a retail store. The visible camera 311 is installed near a ceiling in a store, and an eye tracking sensor 411 that includes the infrared camera 312 and the infrared source 313 is installed in a lower part of a product shelf 401. The visible camera 311 is installed in a position that enables the visible camera 311 to capture, from above, images of a product 402 displayed on the product shelf 401 and an arm 403 of a customer who reaches out for the product 402, and the eye tracking sensor 411 is installed in a position that enables the eye tracking sensor 411 to capture, from below, an image of the arm 403 of the customer. The arm 403 of the customer corresponds to the object 122 of FIG. 3.

In this case, the visible camera 311 and the eye tracking sensor 411 communicate with the position estimating device 314 through a wired or wireless communication network. The position estimating device 314 may be installed in the store or in a different building located away from the retail store.

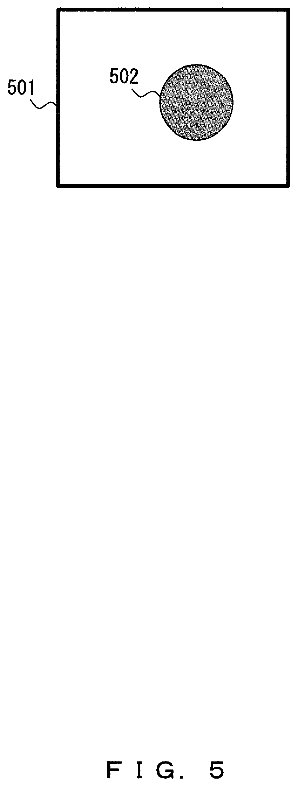

FIG. 5 illustrates an example of a prescribed region, in an infrared image, for which an image is captured by the eye tracking sensor 411 of FIG. 4. When there exists the arm 403 of the customer very close to the eye tracking sensor 411, a whiteout occurs in a prescribed region 502 in an infrared image 501. Thus, region information 335 that indicates the prescribed region 502 is stored in the storage 321.

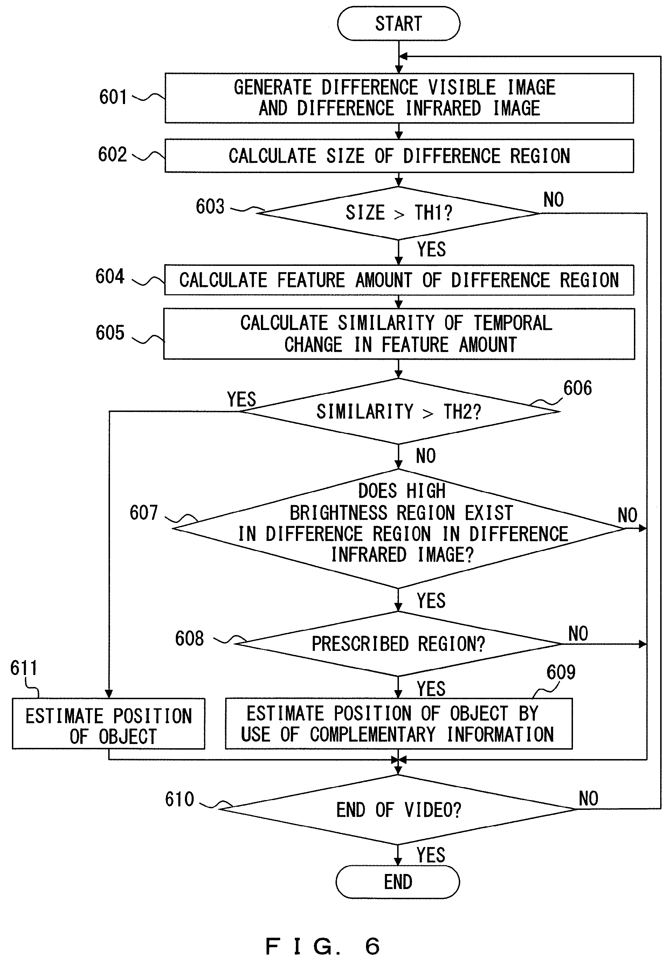

FIG. 6 is a flowchart that illustrates a specific example of position estimating processing performed by the position estimating system 301 of FIG. 3. First, the state change detector 323 extracts a visible image at a first time from the visible video 331 and generates a difference visible image that represents a difference between the extracted visible image and the key visible image 333 (Step 601) . Further, the state change detector 323 extracts an infrared image at the same time from the infrared video 332 and generates a difference infrared image that represents a difference between the extracted infrared image and the key infrared image 334.

Next, the state change detector 323 calculates the sizes of difference regions that are respectively included in the difference visible image and the difference infrared image (Step 602) . The size of a difference region may be a length of the difference region in an image in a horizontal or vertical direction, or may be an area of the difference region.

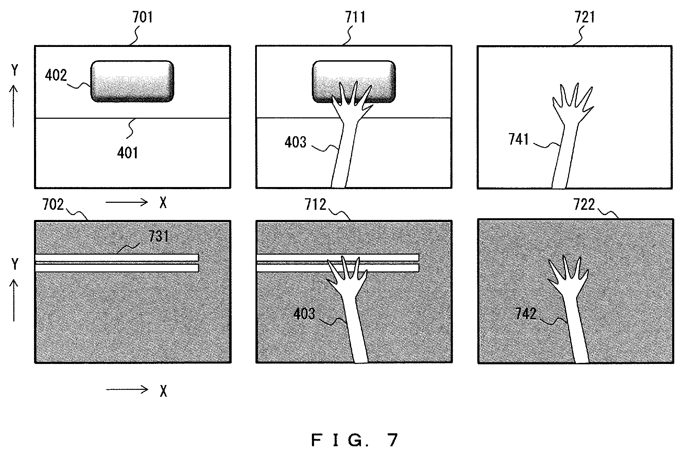

FIG. 7 illustrates examples of a difference visible image and a difference infrared image. A key visible image 701 and a key infrared image 702 correspond to the key visible image 333 and the key infrared image 334, respectively. The product shelf 401 and the product 402 of FIG. 4 appear in the key visible image 333, and a fluorescent light 731 on a ceiling appears in the key infrared image 334.

When a visible image 711 and an infrared image 712 are extracted from the visible video 331 and the infrared video 332, respectively, a difference visible image 721 is generated from the visible image 711 and the key visible image 701, and a difference infrared image 722 is generated from the infrared image 712 and the key infrared image 702. The arm 403 of the customer appears in both the visible image 711 and the infrared image 712, and both a difference region 741 in the difference visible image 721 and a difference region 742 in the difference infrared image 722 correspond to a region of the arm 403.

In Step 602, the state change detector 323 may only extract, as a difference region, a flesh-colored portion from a region that represents a difference in a difference visible image. This permits a more accurate extraction of the region of the arm 403.

Next, the state change detector 323 compares the size of each difference region with a threshold TH1 (Step 603). When both of the sizes of difference regions in a difference visible image and a difference infrared image are greater than the threshold TH1 (Step 603, YES), the state change detector 323 determines that a state has changed. On the other hand, if at least one of the sizes of the difference regions in the difference visible image and the difference infrared image is not greater than the threshold TH1 (Step 603, NO), the state change detector 323 determines that a state has not changed.

TH1 is a threshold used to determine whether the object 122 has appeared in a visible image or an infrared image. For example, when the size of a difference region represents an area, the value equivalent to or more than 10% of the area of an entire image can be used as TH1.

When a state has not changed (Step 603, NO), the state change detector 323 checks whether it has extracted a visible image and an infrared image at a last time from the visible video 331 and the infrared video 332, respectively (Step 610). When it has still not extracted the visible image and the infrared image at the last time (Step 610, NO), the state change detector 323 repeats the processes of and after Step 601 with respect to a visible image and an infrared image at a next time.

On the other hand, when a state has changed (Step 603, YES), the feature amount calculator 324 calculates a feature amount of each difference region (Step 604). For example, a coordinate that represents a representative position such as a center of gravity of a difference region can be used as a feature amount of the difference region. When an image has an X-axis in its horizontal direction and a Y-axis in its vertical direction, the X-coordinate of a center of gravity is an average of X-coordinates of all pixels in a difference region, and the Y-coordinate of the center of gravity is an average of Y-coordinates of all of the pixels in the difference region.

Next, the similarity determination unit 325 calculates a similarity between a temporal change in the feature amount in the visible video 331 and a temporal change in the feature amount in the infrared video 332 (Step 605).

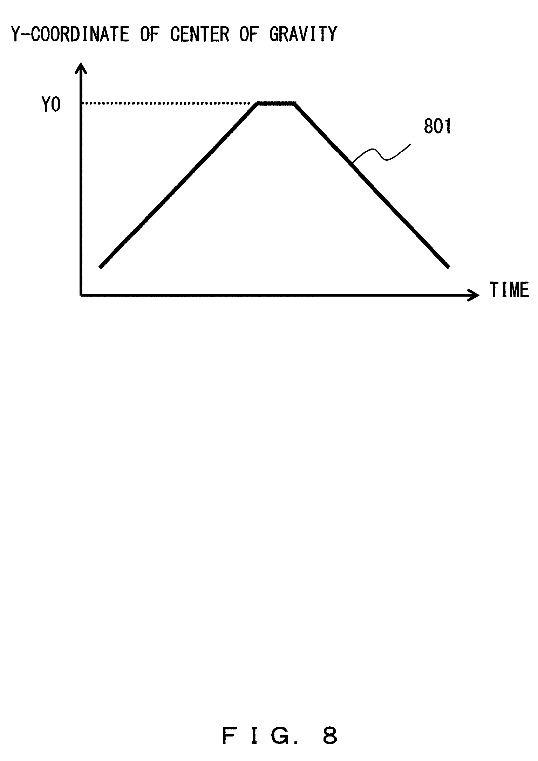

FIG. 8 illustrates an example of a temporal change in the feature amount in the visible video 331. A polygonal line 801 represents how the Y-coordinate of a center of gravity of a difference region changes over time in visible images at a plurality of times included in the visible video 331. When the customer reaches out for the product 402 on the product shelf 401 of FIG. 4, the Y-coordinate of a center of gravity of a difference region that corresponds to the arm 403 increases gradually and remains a constant value Y0 while the customer is gripping the product 402. When the customer draws the hand back while gripping the product 402, the Y-coordinate of the center of gravity decreases gradually from the constant value Y0. At this point, the Y-coordinate of a center of gravity of a difference region in the infrared video 332 may also change along with the polygonal line 801.

Thus, when changes in state have been detected from a visible image and an infrared image at a time t, the similarity determination unit 325 compares a temporal change in the feature amount in the visible video 331 with a temporal change in the feature amount in the infrared video 332 in an interval from a prescribed time t0 to the time t. This permits an estimation of whether a difference region in a difference visible image and a difference region in a difference infrared image represent the same object. The prescribed time t0 may be a first time in the visible video 331 and in the infrared video 332.

For example, the sum or the dispersion of a difference in feature amount at each time, or the reciprocal of its standard deviation can be used as a similarity between temporal changes in two feature amounts. Here, a normalized feature amount may be used to compare a visible image with an infrared image.

Next, the similarity determination unit 325 compares the similarity of a temporal change in feature amount with a threshold TH2 (Step 606). When the similarity is greater than the threshold TH2 (Step 606, YES), the similarity determination unit 325 determines that a difference region in a difference visible image and a difference region in a difference infrared image represent the same object. On the other hand, when the similarity is not greater than the threshold TH2 (Step 606, NO), the similarity determination unit 325 determines that a correspondence relationship between the difference region in the difference visible image and the difference region in the difference infrared image is unclear.

When the similarity is greater than the threshold TH2 (Step 606, YES), the position estimator 327 estimates a three-dimensional position of the object 122 using triangulation, on the basis of a correspondence relationship between the difference region in the difference visible image and the difference region in the difference infrared image (Step 611) . Then, the state change detector 323 performs the processes of and after Step 610.

For example, when the object 122 is the arm 403 of the customer, the position estimator 327 may estimate a three-dimensional positon of a fingertip using a coordinate of a position, in each difference region, which corresponds to the fingertip. This permits a determination of whether the hand of the customer has reached the product 402 on the product shelf 401.

On the other hand, when the similarity is not greater than the threshold TH2 (Step 606, NO), the region determination unit 326 checks whether the difference region in the difference infrared image includes a high brightness region (Step 607). The high brightness region is, for example, a region that corresponds to a collection of pixels that has a brightness value greater than a prescribed value, and that has an area having a value greater than a prescribed value.

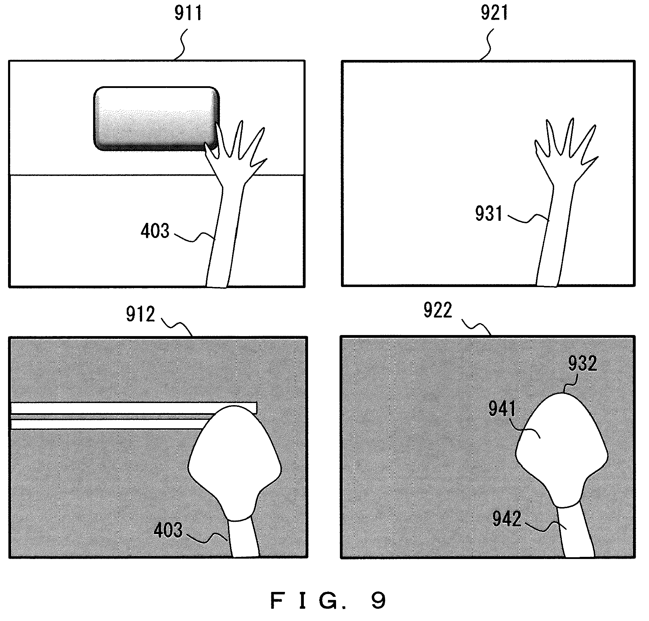

FIG. 9 illustrates an example of a difference region that includes a high brightness region. When a visible image 911 and an infrared image 912 are extracted from the visible video 331 and the infrared video 332, respectively, a difference visible image 921 is generated from the visible image 911 and the key visible image 701, and a difference infrared image 922 is generated from the infrared image 912 and the key infrared image 702. A difference region 931 in the difference visible image 921 and a difference region 932 in the difference infrared image 922 correspond to a region of the arm 403.

In this case, the hand exists very close to the eye tracking sensor 411, so a whiteout occurs in a region 941 of the hand that is included in the difference region 932, and the region 941 is a high brightness region. On the other hand, a whiteout does not occur in a region 942 of the arm that is included in the difference region 932, and the region 942 is a low brightness region.

When the difference region includes a high brightness region (Step 607, YES), the region determination unit 326 determines that the high brightness region is a strongly reflective region. Then, the region determination unit 326 checks whether the strongly reflective region corresponds to a prescribed region indicated by the region information 335 (Step 608). For example, when at least one of the following conditions (a) and (b) is satisfied, the region determination unit 326 can determine that the strongly reflective region corresponds to the prescribed region.
(a) A distance between a representative position of the strongly reflective region and a position of the prescribed region is less than a threshold.
(b) The proportion of the area of an overlapping portion of the strongly reflective region and the prescribed region to the area of the prescribed region is greater than the threshold.

In Step 608, the region determination unit 326 may further check whether the infrared source 313 appears in a visible image at the same time. When the hand of the customer exists very close to the infrared source 313, the infrared source 313 is often hiding behind the customer in the visible video 331. Thus, if it is confirmed that the infrared source 313 does not appear in the visible image at the same time, the confidence that the strongly reflective region corresponds to the prescribed region is improved.

When the difference region does not include a high brightness region (Step 607, NO), or when the strongly reflective region does not correspond to the prescribed region (Step 608, NO), the region determination unit 326 determines that the difference region in the difference visible image and the difference region in the difference infrared image do not represent the same object. Then, the state change detector 323 performs the processes of and after Step 610.

On the other hand, when the strongly reflective region corresponds to the prescribed region (Step 608, YES), the region determination unit 326 determines that the difference region in the difference visible image and the difference region in the difference infrared image represent the same object. Then, the position estimator 327 estimates a three-dimensional position of the object 122 using triangulation, by use of the difference region in the difference visible image and complementary information that complements an image in the strongly reflective region (Step 609), and the state change detector 323 performs the processes of and after Step 610.

For example, an estimated difference region when it is assumed that a whiteout does not occur in an infrared image can be used as complementary information. For example, the position estimator 327 generates an estimated difference region at a current time on the basis of the feature amount of a difference region in a difference visible image at the current time or the feature amount of a difference region in a difference infrared image in the past. The difference infrared image in the past is a difference infrared image that corresponds to an infrared image that was captured at a time before the current time.

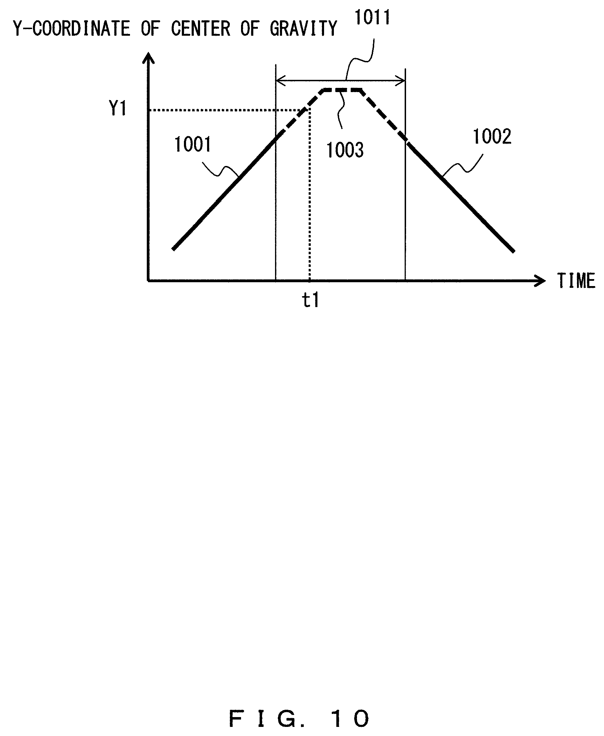

FIG. 10 illustrates an example of a temporal change in the feature amount in the infrared video 332 that includes a high brightness region. A line 1001 and a line 1002 represent how the Y-coordinate of a center of gravity of a difference region changes over time in infrared images at a plurality of times, excluding those included in an interval 1011. In the interval 1011, a difference region in a difference infrared image includes a high brightness region, so the center of gravity of the difference region is not specified.

In this case, the position estimator 327 can estimate the Y-coordinate of the center of gravity in the interval 1011 on the basis of a temporal change in the feature amount in the visible video 331. For example, if the Y-coordinate of a center of gravity is complemented by use of the shape of the polygonal line 801 of FIG. 8, a temporal change represented by a broken line 1003 is generated. In order to generate an estimated difference region at a time t1 in the interval 1011, it is sufficient if a value Y1 at the time t1 in the broken line 1003 is used as the Y-coordinate of a center of gravity of the estimated difference region.

For example, the position estimator 327 can obtain, from a difference region in a difference infrared image at a time before the interval 1011, a shape of an object region that represents the object 122 and a value X1 of the X-coordinate of a center of gravity of the object region. Then, the position estimator 327 generates an estimated difference region by arranging the object region such that the center of gravity of the object region coincides with a point (X1,Y1) in the difference infrared image.

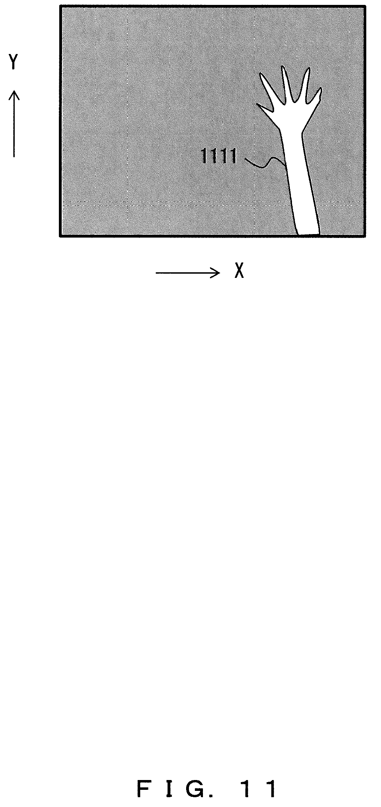

FIG. 11 illustrates an example of a generated estimated difference region. An estimated difference region 1111 in a difference infrared image 1101 represents a difference region when it is assumed that a whiteout does not occur in the infrared image 912 of FIG. 9. Using the estimated difference region 1111 instead of the difference region 932 in the difference infrared image 922 of FIG. 9, the position estimator 327 can estimate a three-dimensional positon of the arm 403. The position estimator 327 may estimate a three-dimensional position of a fingertip using a coordinate of a position, in the estimated difference region 1111, which corresponds to the fingertip.

The position estimator 327 may estimate the Y-coordinate of the center of gravity in the interval 1011 on the basis of a temporal change in the feature amount in an infrared video in the past, in which a whiteout has not occurred, instead of a temporal change in the feature amount in the visible video 331. When an estimated value of the Y-coordinate at the time t1 is Y1' , the position estimator 327 can generate an estimated difference region, for example, by arranging the object region such that the center of gravity of the object region is coincides with a point (X1,Y1') in the difference infrared image.

Further, if the shape of a difference region is not used but only the feature amount of the difference region is used upon estimation of a three-dimensional position of the object 122, an estimated difference region does not always have to be generated. For example, when the feature amount of a difference region is a coordinate of a fingertip, it is possible to estimate a three-dimensional position of the fingertip without generating an estimated difference region. In this case, the feature amount of a difference region in a difference visible image at a current time or the feature amount of a difference region in a difference infrared image in the past can be used as complementary information without any change.

According to the position estimating processing of FIG. 6, even when a whiteout occurs in an infrared image, a position estimation is performed using complementary information if the whiteout occurs in a prescribed region. Thus, the number of cases in which a position estimation is performed using an infrared image will be increased.

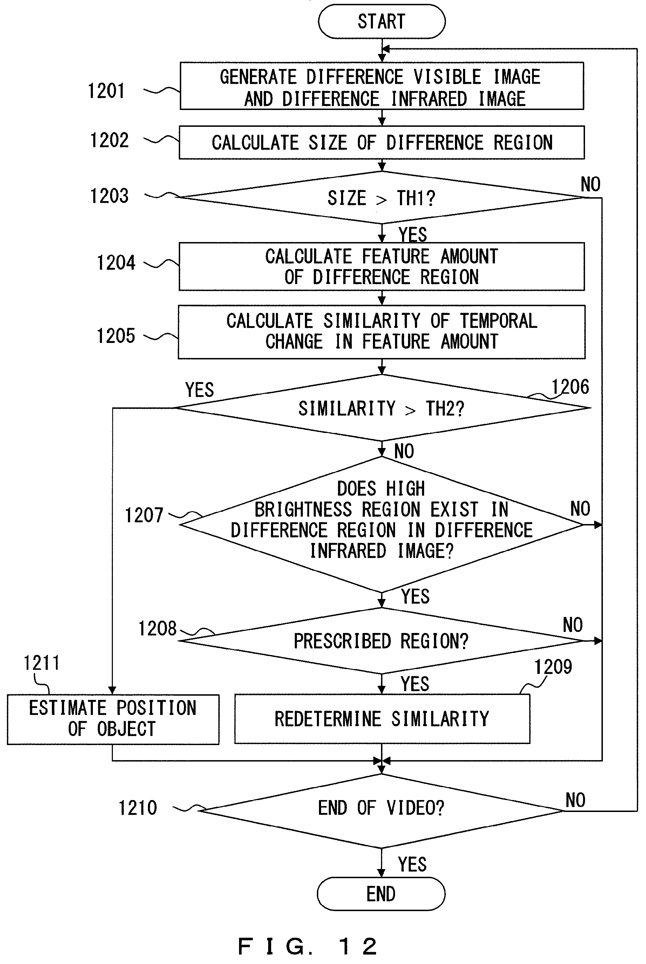

FIG. 12 is a flowchart that illustrates an example of position estimating processing including redetermining a similarity when a whiteout occurs in a prescribed region. The processes of Step 1201 to Step 1208 and the processes of Step 1210 and Step 1211 of FIG. 12 are similar to the processes of Step 601 to Step 608 and the processes of Step 610 and Step 611 of FIG. 6, respectively.

When the strongly reflective region corresponds to the prescribed region (Step 1208, YES), the region determination unit 326 redetermines a similarity of a temporal change in the feature amount on the assumption that there exists a strongly reflective region in the difference region (Step 1209).

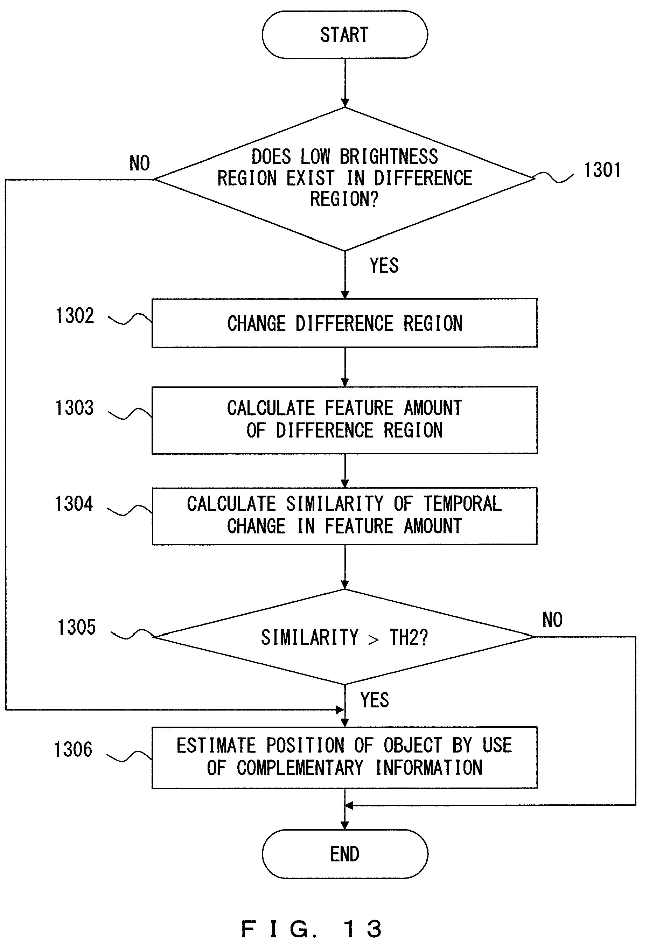

FIG. 13 is a flowchart that illustrates an example of redetermination processing in Step 1209 of FIG. 12. First, the region determination unit 326 checks whether the difference region in the difference infrared image includes a low brightness region (Step 1301). The low brightness region corresponds to a portion excluding a region determined to be a high brightness region in Step 1207. For example, the difference region 932 of FIG. 9 includes the high brightness region 941 and the low brightness region 942.

When the difference region includes a low brightness region (Step 1301, YES), the region determination unit 326 changes the difference region to a difference region only corresponding to a low brightness region (Step 1302). In the case of the difference region 932 of FIG. 9, the high brightness region 941 is excluded, and only the low brightness region 942 corresponds to a difference region after the change.

Next, the feature amount calculator 324 calculates a feature amount of each difference region (Step 1303) . When the Y-coordinate of a center of gravity of a difference region is used as the feature amount of a difference region after the change, as is the case with Step 1204 of FIG. 12, the Y-coordinate of a center of gravity of a difference region has a different value than that of a difference region before the change. Thus, the temporal change in the Y-coordinate of a center of gravity in the interval 1011 of FIG. 10 is represented by a shape obtained by moving the broken line 1003 in parallel with the vertical axis. In this case, the similarity is much less than the value calculated in Step 1205.

Thus, in Step 1303, the feature amount calculator 324 calculates the feature amount of each difference region in a different way than that of Step 1204. In this case, for example, an indicator that represents a temporal change in a representative position of a difference region can be used as the feature amount. The reason is that, even if the shape of a difference region is changed, a temporal change in the representative position is not changed as long as the difference region represents the same object before and after the change of the shape. The indicator that represents a temporal change in a representative position may be a difference between two coordinates at two successive times that represent a representative position of a difference region.

Next, the similarity determination unit 325 calculates a similarity between a temporal change in the feature amount in the visible video 331 and a temporal change in the feature amount in the infrared video 332 (Step 1304), and compares the similarity of a temporal change in the feature amount with a threshold TH2 (Step 1305).

When the similarity is greater than the threshold TH2 (Step 1305, YES), the position estimator 327 estimates a three-dimensional position of the object 122 using triangulation, by use of the difference region in the difference visible image and complementary information that complements an image in the strongly reflective region (Step 1306). On the other hand, when the similarity is not greater than the threshold TH2 (Step 1305, NO), the position estimator 327 does not perform a position estimation.

When the difference region does not include a low brightness region (Step 1301, NO), the position estimator 327 performs the process of Step 1306.

According to such redetermination processing, it is possible to compare again, when a whiteout occurs in a prescribed region, a temporal change in the feature amount in the visible video 331 with a temporal change in the feature amount in the infrared video 332, restricting to a difference region in which a whiteout does not occur. This permits a more accurate determination of a similarity, which results in an improved accuracy in a position estimation based on complementary information.

The position estimating system 301 of FIG. 3 can be used not only to determine whether a customer picked up a product in a retail store but also in various other cases. For example, it is also possible to monitor an action of the hand of a worker in a factory, to monitor an action of the hand of a teacher who is writing on a blackboard in a classroom, to detect, for example, a card that was forgotten to be pulled out from, for example, an automatic teller machine (ATM), or to confirm a form of a movement while exercising.

The configurations of the position estimating system 101 of FIG. 1 and the position estimating system 301 of FIGS. 3 and 4 are merely examples, and some of the components may be omitted or changed according to the applications or the requirements of the position estimating system. For example, a visible camera and a visible light source may be used instead of the infrared camera 312 and the infrared source 313 of FIG. 3. Further, if a setting is performed such that there does not occur an overlapping of a prescribed region, another infrared camera and another infrared source may be used instead of the visible camera 311. Further, the number of installations of the infrared camera 312 and the number of installations of the infrared source 313 do not have to be equal.

When the position estimating device 314 of FIG. 3 performs a position estimation in response to an event other than a change in state, the state change detector 323 can be omitted. When the position estimating device 314 determines, on the basis of an indicator other than a similarity of a temporal change in a feature amount, that a difference region in a difference visible image and a difference region in a difference infrared image represent the same object, the feature amount calculator 324 and the similarity determination unit 325 can be omitted.

The object 122 of FIGS. 1 and 3 is not limited to the hand or the arm of a man, but it may be the head or the face, or may be a tool such as tongs. The visible camera 311 or the eye tracking sensor 411 of FIG. 4 may be installed in another place in a store.

The flowcharts of FIGS. 2, 6, 12, and 13 are merely examples and some of the processes may be omitted or changed according to the configurations or the requirements of the position estimating system. For example, when a position estimation is performed in response to an event other than a change in state, the process of Step 603 of FIG. 6 and the process of Step 1203 of FIG. 12 can be omitted. When the similarity of a temporal change in a feature amount is not used, the processes of Step 604 to Step 606 of FIG. 6 and the processes of Step 1204 to Step 1206 of FIG. 12 can be omitted.

The prescribed region 502 of FIG. 5 is merely an example, and a prescribed region having another shape or size may be used. The visible images and the infrared images of FIGS. 7, 9, and 11 are merely examples, and other images may be used. The temporal changes in feature amounts of FIGS. 8 and 10 are merely examples, and the feature amounts may present other temporal changes according to the type of feature amount or the definition of a coordinate system in an image.

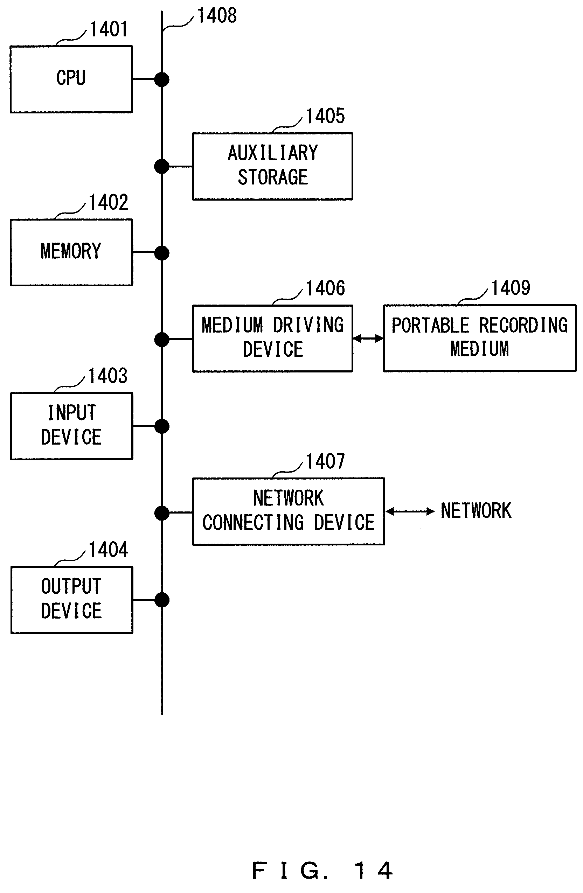

The position estimating device 114 of FIG. 1 and the position estimating device 314 of FIG. 3 can be realized by, for example, an information processing device (a computer) illustrated in FIG. 14.

The information processing device of FIG. 14 includes a central processing unit (CPU) 1401, a memory 1402, an input device 1403, an output device 1404, an auxiliary storage 1405, a medium driving device 1406, and a network connecting device 1407. These components are connected to one another via a bus 1408. The imaging device 111 and the imaging device 112 of FIG. 1, and the visible camera 311 and the infrared camera 312 of FIG. 3 may be connected to the network connecting device 1407 through a communication network.

The memory 1402 is, for example, a semiconductor memory such as a read only memory (ROM), a random access memory (RAM), and a flash memory, and stores therein a program and data used for performing the position estimation processing. The memory 1402 can be used as the storage 321 of FIG. 3.

For example, the CPU 1401 (processor) operates as the video capturing unit 322, the state change detector 323, the feature amount calculator 324, the similarity determination unit 325, the region determination unit 326, and the position estimator 327 of FIG. 3 by executing the program by use of the memory 1402.

The input device 1403 is, for example, a keyboard or a pointing device, and is used for inputting instructions or information from an operator or a user. The output device 1404 is, for example, a display, a printer, or a speaker, and is used for outputting inquiries or instructions to the operator or the user, or outputting a result of processing. The result of processing may be a result of estimating a three-dimensional position of the object 122.

The auxiliary storage 1405 is, for example, a magnetic disk device, an optical disk device, a magneto-optical disk device, or a tape device. The auxiliary storage 1405 may be a hard disk drive. The information processing device stores the program and the data in the auxiliary storage 1405 so as to load them into the memory 1402 and use them. The auxiliary storage 1405 can be used as the storage 321 of FIG. 3.

The medium driving device 1406 drives a portable recording medium 1409 so as to access the recorded content. The portable recording medium 1409 is, for example, a memory device, a flexible disk, an optical disc, or a magneto-optical disk. The portable recording medium 1409 may be, for example, a compact disk read only memory (CD-ROM), a digital versatile disk (DVD), or a universal serial bus (USB) memory. The operator or the user can store the program and the data in the portable recording medium 1409 so as to load them into the memory 1402 and use them.

As described above, a computer-readable recording medium that stores therein a program and data used for the position estimating processing is a physical (non-transitory) recording medium such as the memory 1402, the auxiliary storage 1405, and the portable storage medium 1409.

The network connecting device 1407 is a communication interface that is connected to a communication network such as a local area network or a wide area network and makes a data conversion associated with communication. The information processing device can receive the program and the data from an external device via the network connecting device 1407 so as to load them into the memory 1402 and use them. The information processing device can also receive a processing request from a user terminal, perform the position estimating processing, and transmit a result of processing to the user terminal.

The information processing device does not necessarily include all of the components in FIG. 14, and some of the components can be omitted according to the applications or the requirements. For example, when the instructions or the information from the operator or the user is not to be input, the input device 1403 may be omitted. When the inquiries to the operator or the user or the result of processing is not to be output, the output device 1404 maybe omitted. When the portable recording medium 1409 is not used, the medium driving device 1406 may be omitted.

## Claims

1. A position estimating device comprising:
a storage (321) configured to store a first image of an object (122) in an image-capturing target region (121) and a second image, the first image being captured by a first imaging device (111, 311), and the second image being captured by a second imaging device (112, 312) by use of a reflected electromagnetic wave from the image-capturing target region, using an electromagnetic source (113, 313) that radiates an electromagnetic wave onto the image-capturing target region; and
a position estimator (327) configured to estimate a position of the object on the basis of the first image and complementary information that complements an image of a strongly reflective region in the second image when a position of the strongly reflective region corresponds to a prescribed position in the second image.

2. The position estimating device according to claim 1, wherein
the position estimator is configured to use information (1003, 1111) obtained from the first image as the complementary information.

3. The position estimating device according to claim 1, wherein
the second imaging device is configured to capture a third image by use of a reflected electromagnetic wave from the image-capturing target region before capturing the second image, and the position estimator is configured to use information obtained from the third image as the complementary information.

4. The position estimating device according to any one of claims 1 to 3, further comprising
a determination unit (325) configured to determine (1209, 1301-1305), on the basis of a feature amount obtained from a region in the vicinity of the strongly reflective region, whether the position of the object is to be estimated when the position of the strongly reflective region corresponds to the prescribed position,
wherein the position estimator is configured to estimate (1306) the position of the object on the basis of the first image and the complementary information when the position of the object is to be estimated.

5. A position estimating method comprising:
capturing (201), by a first imaging device, a first image of an object in an image-capturing target region;
radiating (202), by an electromagnetic source, an electromagnetic wave onto the image-capturing target region;
capturing (203), by a second imaging device, a second image by use of a reflected electromagnetic wave from the image-capturing target region; and
estimating (204) a position of the object on the basis of the first image and complementary information that complements an image of a strongly reflective region in the second image when a position of the strongly reflective region corresponds to a prescribed position in the second image.

6. The position estimating method according to claim 5, wherein
the estimating the positon of the object uses information (1003, 1111) obtained from the first image as the complementary information.

7. The position estimating method according to claim 5, further comprising capturing, by the second imaging device, a third image by use of a reflected electromagnetic wave from the image-capturing target region before capturing the second image, wherein the estimating the positon of the object uses information obtained from the third image as the complementary information.

8. The position estimating method according to any one of claims 5 to 7, wherein
the estimating the positon of the object determines (1209, 1301-1305), on the basis of a feature amount obtained from a region in the vicinity of the strongly reflective region, whether the position of the object is to be estimated when the position of the strongly reflective region corresponds to the prescribed position, and estimates (1306) the position of the object on the basis of the first image and the complementary information when the position of the object is to be estimated.

9. A position estimating program that causes a computer to execute a process comprising:
estimating (204) a position of an object on the basis of a first image of the object in an image-capturing target region and complementary information that complements an image of a strongly reflective region in a second image when a position of the strongly reflective region corresponds to a prescribed position in the second image,
wherein the first image is captured (201) by a first imaging device, and the second image is captured (203) by a second imaging device by use of a reflected electromagnetic wave from the image-capturing target region, using an electromagnetic source that radiates (202) an electromagnetic wave onto the image-capturing target region.

10. The position estimating program according to claim 9, wherein
the estimating the positon of the object uses information (1003, 1111) obtained from the first image as the complementary information.

11. The position estimating program according to claim 9, wherein
the second imaging device captures a third image by use of a reflected electromagnetic wave from the image-capturing target region before capturing the second image, and the estimating the positon of the object uses information obtained from the third image as the complementary information.

12. The position estimating program according to any one of claims 9 to 11, wherein
the estimating the positon of the object determines (1209, 1301-1305), on the basis of a feature amount obtained from a region in the vicinity of the strongly reflective region, whether the position of the object is to be estimated when the position of the strongly reflective region corresponds to the prescribed position, and estimates (1306) the position of the object on the basis of the first image and the complementary information when the position of the object is to be estimated.
